# EUROPÄISCHE PATENTSCHRIFT

(11) **EP 1 234 906 B1**
(45) Veröffentlichungstag und Bekanntmachung des Hinweises auf die Patenterteilung: **19.08.2009**
(21) Anmeldenummer: 02001390.0
(22) Anmeldetag: 19.01.2002
(51) Int. Cl.: D04H 5/08, D04H 1/56, D04H 3/16, B01D 39/08, B01D 39/16, D04H 5/06

(54) **Strukturiertes, voluminöses Meltblown-Vlies**
Bulky structured melblown nonwoven web
Nontissé volumineux et structuré obtenu par fusion-soufflage (meltblown)

(30) Priorität: 27.02.2001 DE 10109304
(43) Veröffentlichungstag der Anmeldung: 28.08.2002
(73) Patentinhaber: Sandler AG, 95126 Schwarzenbach/Saale (DE)
(72) Erfinder:

(56) Entgegenhaltungen:
- EP-A- 0 864 682
- EP-A- 1 099 787
- EP-A- 1 179 625
- DE-A- 19 956 368
- US-A- 4 714 647
- US-A- 5 643 507
- US-A- 5 711 970
- PATENT ABSTRACTS OF JAPAN vol. 1997, no. 10, 31. Oktober 1997 (1997-10-31) & JP 09 170150 A (TOYOBO CO LTD), 30. Juni 1997 (1997-06-30) & JP 09 170150 A (TOYO BOSEKI) 30. Juni 1990 (1990-06-30)
- PATENT ABSTRACTS OF JAPAN vol. 014, no. 310 (C-0736), 4. Juli 1990 (1990-07-04) & JP 02 104765 A (TORAY IND INC), 17. April 1990 (1990-04-17) & JP 02 104765 A (TORAY INDUSTRIES) 17. April 1999 (1999-04-17)

## Beschreibung

Bekannte Meltblown-Vliesstoffe haben eine gute Filtrationswirkung gegenüber flüssigen oder gasförmigen Fluiden. Nachteilig wirkt sich dabei die Tatsache aus, dass die Speicherwirkung für die abgeschiedenen Inhaltsstoffe der Fluide meist nur gering ist, was zum Verstopfen der Filtermedien unter gleichzeitig drastischer Verringerung der Standzeit führt.

Um dieses Problem zu lösen, wurde eine Vielzahl von Anstrengungen unternommen, von welchen nachstehend einige stellvertretend genannt sind.

So wird beispielsweise in der US 5,643,507 ein Verfahren geschützt, welches eine strukturierte Oberfläche auf Meltblown-Materialien für den Einsatz als Filtermedium erzeugt. Bei dieser Herstelltechnologie wird der Meltblown-Faserstrom durch mit unterschiedlicher Geschwindigkeit laufende Kollektorwalzen einseitig bereichsweise zusammengeschoben. Dabei erzielt man eine Oberflächenstruktur mit Bereichen geringer Dicke und Bereichen hoher Dicke. Letztere sind mit dem zusammengeschobenen, verdichteten Fasermaterial gefüllt und können daher nur wenig Staub speichern. Dies bedingt zwar eine Erhöhung der Abscheideleistung, allerdings zu Lasten des Staubspeichervermögens.

Die DE-Anmeldung 101 03 627.2 offenbart ein zonenweise thermisch komprimiertes Meltblown-Vlies, welches im Bereich der Aufnahme- und Verteil-Vliesstoffe Anwendung finden kann. Auch hier ist eine Struktur zu erkennen, welche aus Zonen geringer und hoher Dicke besteht.

Wie in der vorhergehend genannten Schrift bereits beschrieben, liegt auch hier der Hauptnachteil in der Komprimierung der verwendeten Ausgangsmaterialien. Das Endprodukt verfügt zwar über eine sehr gute und kontrollierte Verteilwirkung, die Aufnahmefähigkeit ist jedoch, aufgrund der erwähnten Vorkomprimierung, beschränkt und daher verbesserungsbedürftig.

Die US 5,858,515 zeigt ein Vlies, welches mittels einer Kalanders geprägt ist, sodass punktförmige, unverfestigte Bereiche im Vlies entstehen. Diese unterstützen die Reinigungswirkung des so hergstellten Materials, haben aber eine nur ungenügende Speicherwirkung bei der Reinigung von glatten Oberflächen, was zum Verschmieren der Schmutzpartikel führen kann.

Die Aufgabe der Erfindung war es daher, die Nachteile des Standes der Technik zu vermeiden und ein Meltblown-Vlies bereitzustellen, welches bei niedrigem Flächengewicht und hoher Dicke eine Oberflächenstruktur aufweist und Kavitäten für die Speicherung von Partikeln bereitstellt, sodaß ein hoher Fluiddurchgang bei gleichzeitig gutem Speichervermögen für die Fluide selbst, beziehungsweise für in den Fluiden enthaltene Feststoffe bzw. Flüssigkeiten gewährleistet ist.

Die Aufgabe ist gemäß den Merkmalen des Anspruches 1 gelöst. Vorteilhafte Ausgestaltungen sind in den Unteransprüchen 2-14 genannt.

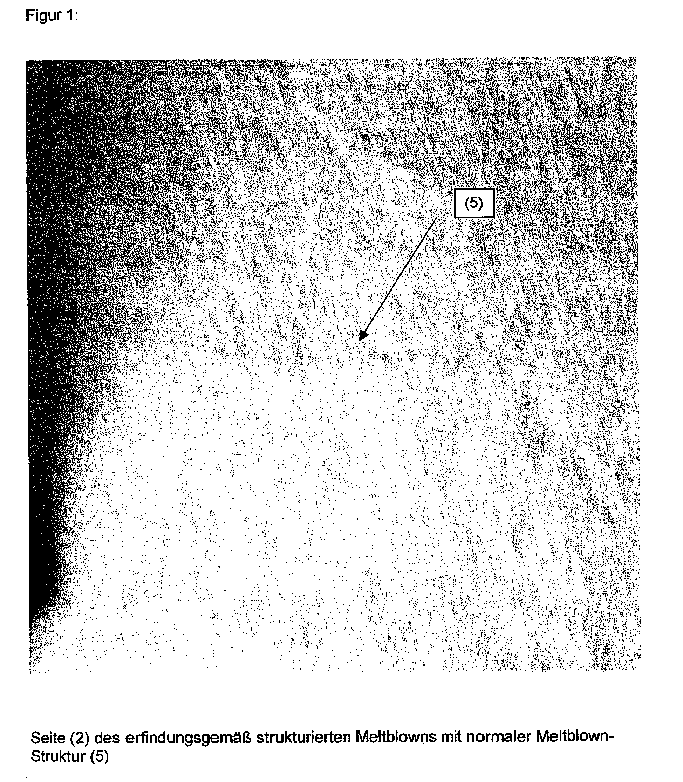

Der erfindungsgemäße Vliesstoff, wie in den Figuren 1 bis 3 gezeigt, zeichnet sich dabei durch eine Zweiseitigkeit aus, wobei die eine Seite (2) eine glatte Oberfläche hat und die andere Seite (1) eine unregelmäßige Grobstruktur (3) aufweist. Diese kann, je nach Herstellungsprozess, von reliefartig über lederartig narbig bis hin zu baumrindenähnlichem Aussehen variieren.

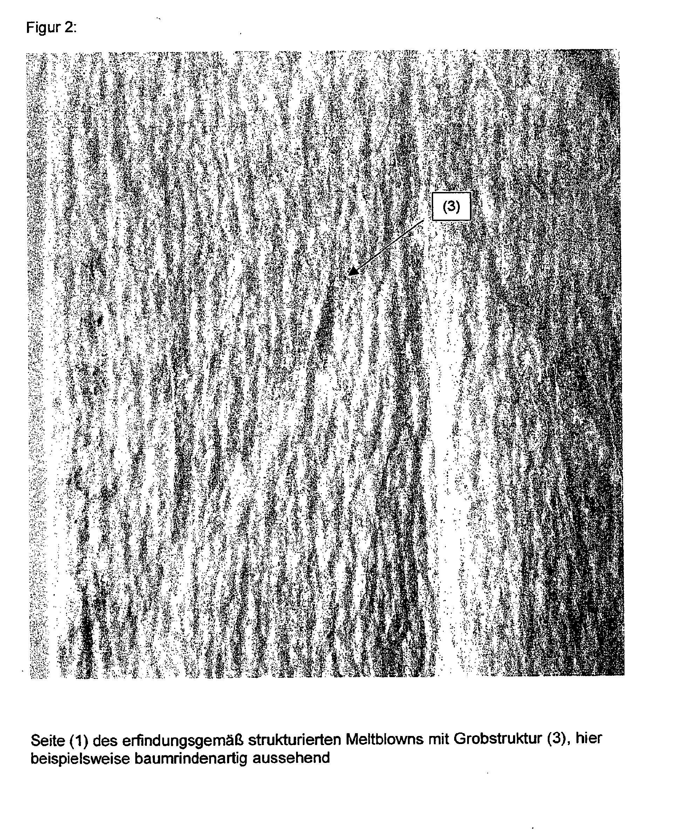

Wie in Figur 2 beispielsweise gezeigt, ist für alle beanspruchten Strukturen kennzeichnend, dass diese leicht auf der Oberfläche optisch erkennbar sind. Dabei lassen die beanspruchten Strukturen keine Regelmäßigkeit erkennen.

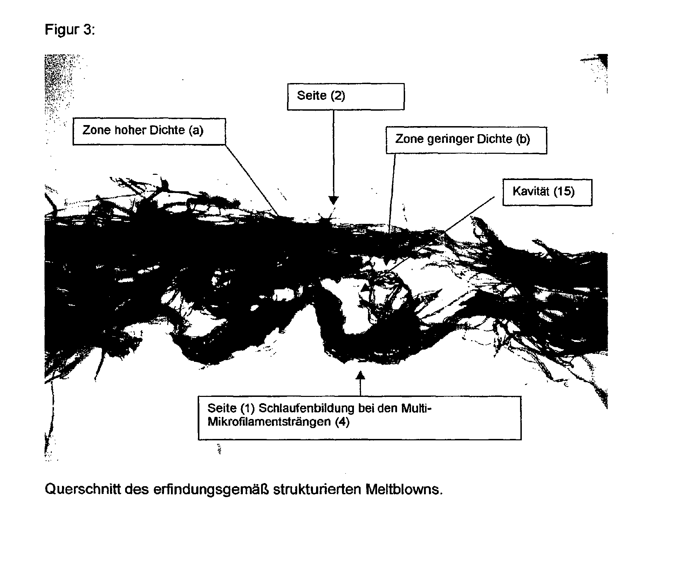

Die Figur 3 zeigt die Anordnung der Zonen höherer Dichte (a) zu den Zonen geringerer Dichte (b). In der Querschnittsdarstellung ist zu erkennen, dass die Zonen geringer Dichte (b) durch schlaufen- oder hakenförmig liegende Multi-Mikrofilamentstränge (4) gebildet werden und Kavitäten (15) enthalten.

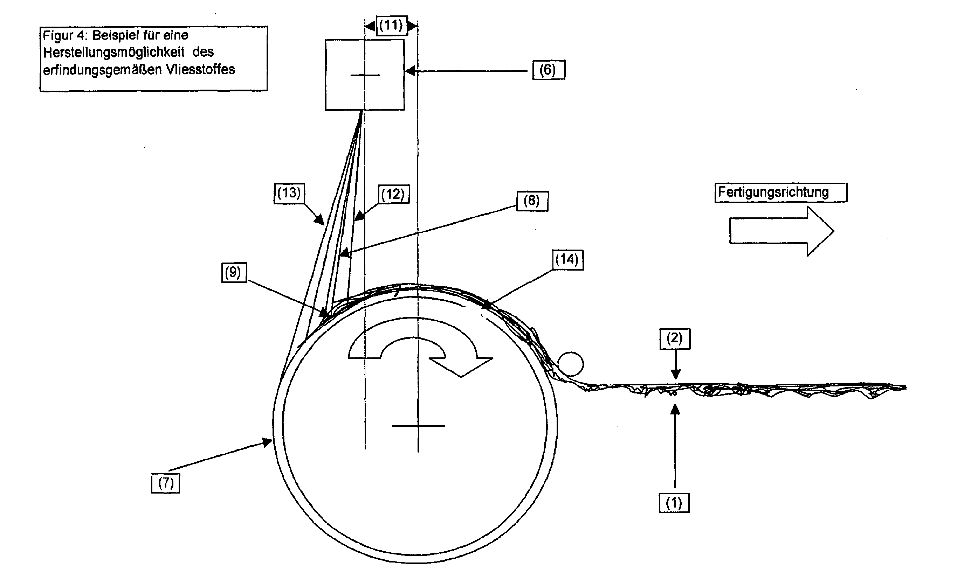

Ein möglicher Verfahrensweg für die Herstellung einer derartigen Struktur wird in der Figur 4 gezeigt und nachstehend anhand eines Beispiels beschrieben.

Ausgehend von einem bekannten Meltblown-Prozess, wie etwa erläutert in der DE - Anmeldung 19953717, wird durch die Einstellung der Meltblown-Düse (6) ein Mikrofaserstrom (8) gebildet, welcher neben den Mikrofasern auch Mikrofaserfilamente und Multi-Mikrofilamentstränge (4) enthält.

Dabei ist die Mittelachse der Meltblown-Düse (6) zur Mittelachse der Kollektortrommel (7) negativ, das heisst entgegen der Fertigungsrichtung, um die Länge (11) verschoben.

Desweiteren ist zur Herstellung des erfindungsgemäßen Vliesstoffes die Öffnung (14) der Vakuumeinrichtung in der Kollektortrommel (7) in 1-Uhr-Stellung positioniert, sodaß in der Aufprallzone (9) kein Vakuum herrscht.

Der Abstand der Kollektortrommel (7) zur Meltblown-Düse (6) ist dabei so zu bemessen, dass die Multi-Mikrofilamentstränge noch eine gewisse Klebrigkeit aufweisen und sich so untereinander verbinden können. Dadurch bildet sich auf der der Kollektortrommel (7) abgewandten Seite (2) die Oberflächenstruktur (5), wie in Figur 1 gezeigt.

Wie sich aus den in Tabelle 1 beispielsweise genannten Maschineneinstellungen entnehmen lässt, wird der zur Ausbildung der Meltblown-Fasern notwendige Primärluftstrom am Auslass der Meltblown-Düse (6) so eingestellt, dass die Fördermenge an Primärluft entgegen der Fertigungsrichtung um 40% größer ist, als die Fördermenge in Fertigungsrichtung.

**Tabelle 1: Beispielhafte Maschineneinstellung für die Herstellung des erfindungsgemäßen Vliesstoffes**

| | Stand der Technik | Erfindungsgemäß |
|---|---|---|
| Granulat: | PP- BorealisFL 508 | PP- BorealisFL 508 |
| Kühlwasserdruck: | 40 bar | 30 bar |
| Abstand Meltblowndüse (6) zur Kollektortrommel (7) | 20 cm | 63 cm |
| Primärluftvolumenstrom | 33 m³/h beidseitig | 38 m³/h entgegen Fertigungsrichtung 25 m³/h in Fertigungsrichtung |
| Extrudertemperatur: | 250°C | 250°C |
| Düsenspitze: | 280°C | 280°C |
| Leistung an der Düsenspitze | 40 kg/h*m | 40 kg/h*m |
| Länge (11) (Versatz MB-Düse (6) zu Kollektortrommel(7) | 0 cm | 18 cm |
| Geschwindigkeit der Kollektortrommel | 13,6 m/min | 13,4 m/min |
| Luftdurchlaß 200Pa: | 430 l/m²*s | 2400 l/m²*s |
| Flächengewicht | 49 g/m² | 51 g/m² |
| Dicke, 0,05N/cm² | 0,25 | 0,93 mm |
| Mittlere Feinheit der Mikrofasern | 3,9 µm | 5,3 µm |
| Mittlere Feinheit der Multi-Mikrofilamentstränge (4) | --- | 45 µm |

Der sich ergebende Strom an Meltblown-Fasern (8) trifft durch die beschriebenen Einstellungen die Aufprallzone (9) der Kollektortrommel (7) mit seinem kurzen Schenkel (12) in 11-Uhr-Position und mit seinem langen Schenkel (13) tangential auf die Oberfläche der Kollektortrommel (7).

Durch diese Einstellung bleiben beim ersten Auftreffen der Meltblown-Fasern (8) nur die Spitzen der gebildeten Fasern bzw. Multi-Mikrofilamentstränge (4) an der Kollektortrommel (7) hängen und werden in Fertigungsrichtung abtransportiert.

Unter dem Einfluss des herrschenden Luftstroms in der Aufprallzone (9) werden auch die noch freiliegenden Abschnitte der Multi-Mikrofilamentstränge (4) an die Kollektortrommel (7) angedrückt und bilden dabei die Seite (2) des erfindungsgemäßen Vliesstoffes.

Dadurch ergibt sich, im Querschnitt gesehen, eine Haken- oder Schlaufenstellung der Multi-Mikrofilamentstränge (4), die in der Summe aller sich bildenden Haken und Schlaufen zur erfindungsgemäßen Struktur führen.

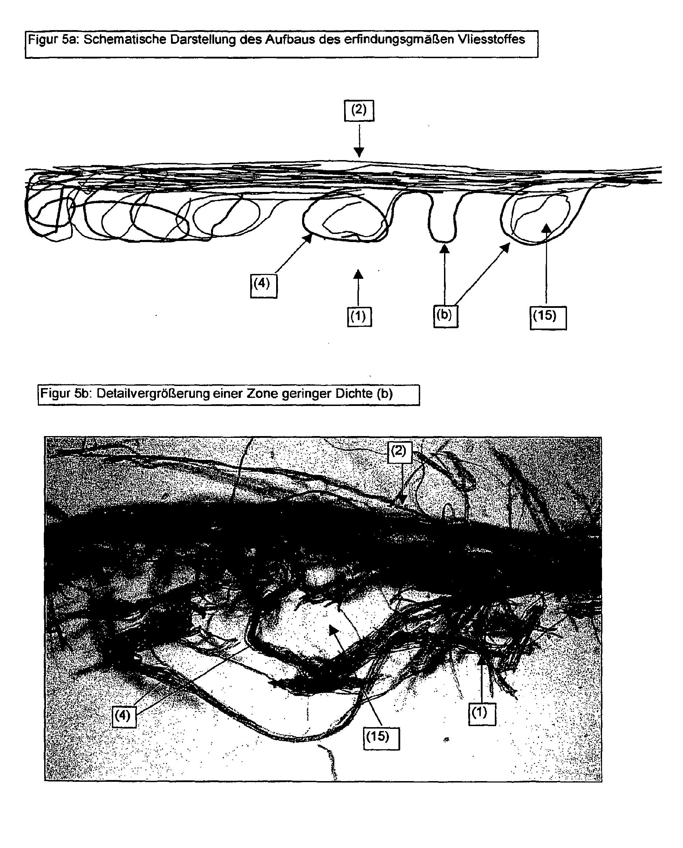

Wie aus den Figuren 5a und 5b erkennbar, kann es auch durchaus zu Überlagerungen der Multi-Mikrofilamentstränge (4) kommen.

Mikroskopisch betrachtet haben die gebildeten Zonen geringer Dichte (b) Höhen von 0,3 mm bis 1,8 mm. Der Abstand der einzelnen Zonen (b) zueinander kann, je nach Verfahrensführung, von 0,5 mm bis zu 5 mm betragen.

Wird in der Herstellung die Bildung der Multi-Mikrofilamenstränge gefördert, beispielsweise durch Turbulenzen aufgrund der unterschiedlichen Primärluft-Volumenströme und durch Vergrößerung der Länge (11), ist es leichter große Kavitäten (15) in den Zonen geringer Dichte (b) zu erzeugen, da sich die Rückstellkraft der einzeln Multi-Mikrofilamentstränge (4) vergrößert und die Aufschichtung hin zur Schlaufen- oder Hakenstellung verstärkt.

Die erfindungsgemäße Struktur ist nur auf der der Kollektortrommel (7) zugewandten Seite (1) des erfindungsgemäßen Meltblown-Vliesstoffes erkennbar. Die der Kollektortrommel (7) abgewandte Seite (2) weist eine normale Meltblown-Struktur (5) auf, die dem Vliesstoff die erforderliche mechanische Stabilität verleiht.

Der so beispielsweise hergestellte, erfindungsgemäße Vliesstoff kann in einer Vielzahl von Einsatzbereichen zur Anwendung kommen. Nachfolgend seien nur einige davon genannt und vertieft.

Im Bereich der Filtration von Fluiden, wie Gasen oder Flüssigkeiten, ist es eine prinzipielle Bestrebung, eine möglichst hohes Staubspeichervermögen bei gleichzeitig geringem Abfall des Differenzdrucks über die Zeit und damit möglichst gleichbleibender Luftdurchlässigkeit zu erzielen.

Bei herkömmlichen, dem Stand der Technik entsprechenden, Aufbauten von Staubsaugerbeuteln werden, wie beispielsweise in EP 0960 645 A2 gezeigt, Filterpapiere mit voluminösen Meltblown-Vliesen kombiniert. Mit entsprechender Staubbeladung während des Gebrauchs nimmt der Differenzdruck zu und die Luftdurchlässigkeit ab.

Die Verwendung des erfindungsgemäß strukturierten, voluminösen Meltblown-Vlieses in dieser Kombination bringt ein Druckabfallverhalten, welches Kombinationen mit Vliesen des Standes der Technik überlegen ist.

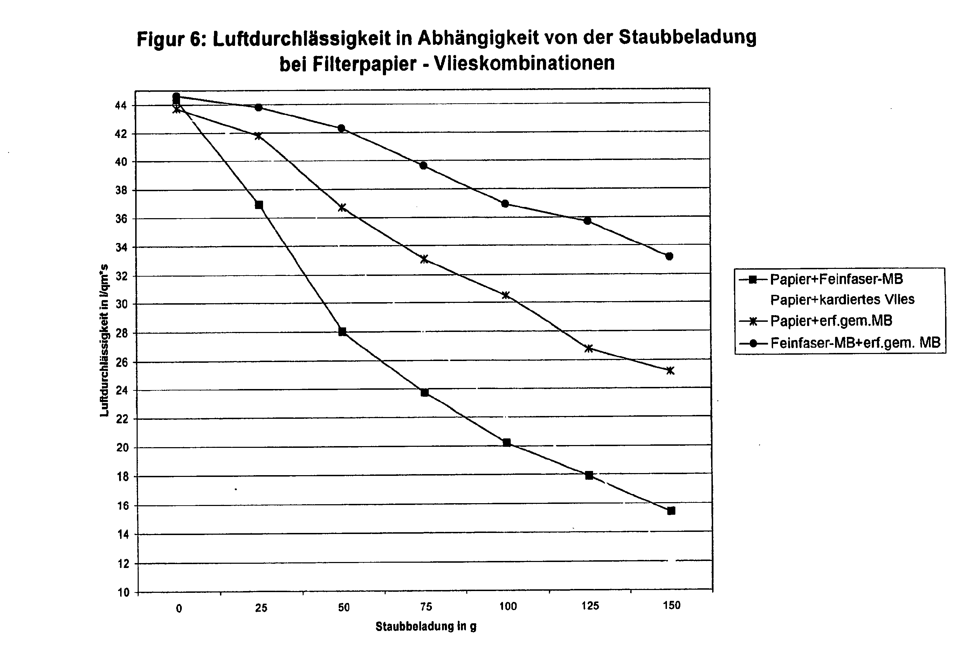

Die nachstehende Tabelle und deren grafische Auswertung in Figur 6 zeigen die Luftdurchlässigkeit ausgewählter Kombinationen von Papieren mit Meltblown-Vliesen in Abhängigkeit von der Staubbeladung.

**Tabelle 2: Abhängigkeit der Luftdurchlässigkeit (LD) in l/qm*s bei 200Pa von der Staubbeladung in g**

| **Beladung (g)** | **Papier + kardiertes Vlies** | **Papier + Feinfaser-MB** | **Papier + erf.gem. MB** | **Stabiles MB+ erf.gem. MB** |
|---|---|---|---|---|
| 0 | 44,3 | 43,3 | 43,7 | 44,6 |
| 25 | 36,9 | 41,2 | 41,8 | 43,8 |
| 50 | 28,0 | 33,7 | 36,7 | 42,3 |
| 75 | 23,7 | 27,8 | 33,1 | 39,6 |
| 100 | 20,2 | 21,8 | 30,5 | 36,9 |
| 125 | 17,9 | 18,7 | 26,8 | 35,7 |
| 150 | 15,4 | 12,2 | 25,2 | 33,2 |
| Reduktion der LD gegenüber Anfang | **65 %** | **81%** | **42%** | **25%** |

Dabei kamen folgende Ausgangsstoffe zum Einsatz:
Papier =Filterpapier mit 47g/qm und Luftdurchlässigkeit von 330 l/qm*s bei 200Pa Staub = AC fein (Normstaub)
Feinfaser-MB = Stand der Technik gemäß Einstellungen von Tabelle 1
Kardiertes Vlies = thermisch kalanderverfestigtes PP-Vlies 35 g/qm
Stabiles MB = Nach DE-Anmeldung 199 56 368.3 hergestelltes Meltblown

Betrachtet man die Werte, so erkennt man, dass bei Verwendung des erfindungsgemäßen Meltblown-Vlieses der Abfall der Luftdurchlässigkeit bei zunehmender Staubbeladung bei maximal 42% liegt, wohingegen die Verwendung von Vliesen konventioneller Art Reduktionen bis zu 81% bedingt.

Diese geringe Reduktion der Luftdurchlässigkeit bei der Verwendung der erfindungsgemäßen Vliesstoffe wird bewirkt durch die in dieser Struktur enthaltenen Kavitäten, die als Speicherräume für den anfallenden Staub dienen.

Dies bedeutet für den Einsatz als zum Beispiel Filterbeutel im Staubsauger eine wesentlich höhere Standzeit. Durch die gegebene höhere Luftdurchlässigkeit lassen sich höhere Luftgeschwindigkeiten an der Saugdüse erzielen, was dem Trend zur Leistungserhöhung bei Bodenreinigungsgeräten entgegen kommt.

Darüberhinaus ist es bei Verwendung des Aufbaus aus Feinfaser-Meltblown und dem erfindungsgemäßen Meltblown-Vlies möglich, ein sortenreines Material herzustellen, was sich während der Beutelkonfektion leicht verschweißen lässt und bei der späteren Entsorgung einfach zu recyceln ist.

Neben dieser Anwendung kann der erfindungsgemäße Vliesstoff in anderen Bereichen, wie beispielsweise Windeln oder Damenbinden, hier speziell als Aufnahme- und Verteilvliesstoff zur Verwendung kommen.

Die Aufgabenstellung ist hier die schnelle Aufnahme von Flüssigkeiten, die Zwischenspeicherung und die Weiterleitung dieser an den Saugkörper.

Der Lagenaufbau von derartigen, körperflüssigkeiten-absorbierenden Produkten lässt sich wie folgt charakterisieren:
➢ Dem Benutzer zugewandtes Topsheet aus z. B. thermobonded PP-Vliesstoff
➢ Aufnahme-/ Verteillage
➢ Saug-/ Speicherschicht aus beispielsweise Cellulose-Pulp mit SAP-Anteilen
➢ Backsheet aus z.B. PE-Folie

Die Funktion konventioneller, nach dem Stand der Technik hergestellter Aufnahme-/Verteillagen ist es nun, die Körperflüssigkeiten, nachdem sie durch das Topsheet penetriert sind, zunächst aufzunehmen und in sich möglichst großflächig zu verteilen, um dann die Körperflüssigkeiten innerhalb vertretbarer Zeit an die Saug-/Speicherschicht zur Immobilisierung abzugeben.

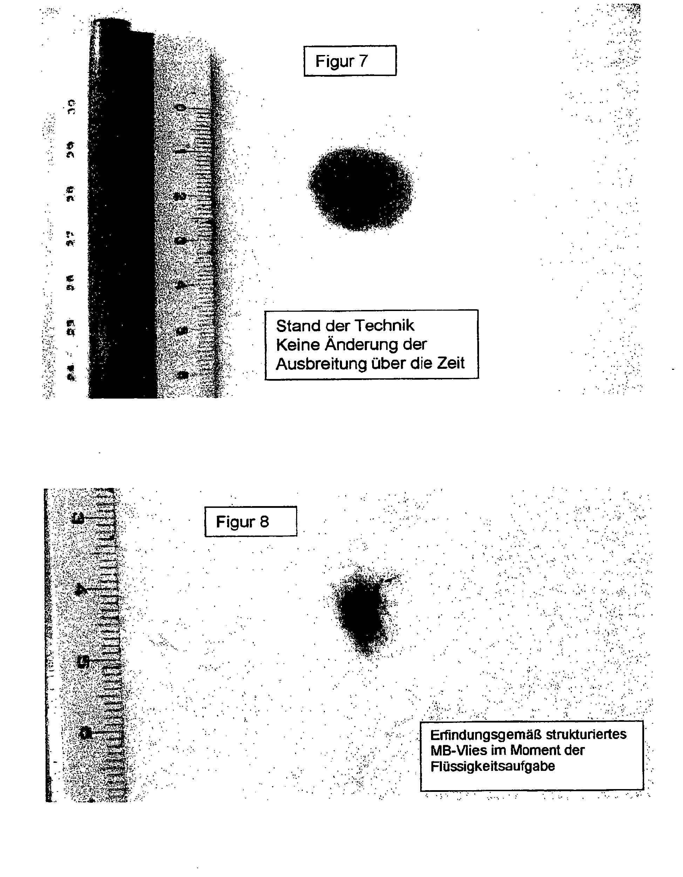

Betrachtet man Figur 7, so sieht man eine typische Verteilung von Körperflüssigkeiten bei Verwendung von Aufnahme-/ Verteillagen nach dem Stand der Technik.

Die Verteilung geschieht konzentrisch um den Aufgabepunkt herum, ist in der Aufnahme-/Verteillage nur ungenügend und geschieht hauptsächlich in der eigentlich zu entlastenden Saug-/ Speicherschicht.

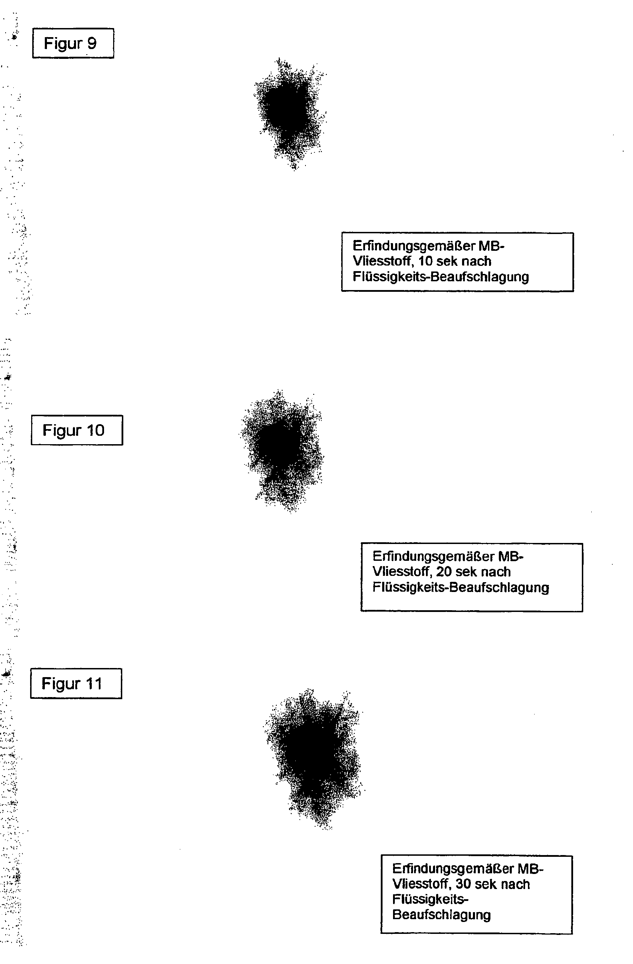

Die Figuren 8 bis 11 zeigen eine vergleichsweise durchgeführte Prüfung mit einem als Aufnahme-/ Verteillage eingesetzten erfindungsgemäßen strukturierten Vliesstoff.

Deutlich erkennbar ist die Aufnahme und Zwischenspeicherung der Körperflüssigkeiten in den Zonen geringer Dichte (b) und die Verteilung entlang der Zonen höherer Dichte (a).

Im Vergleich zu den aus der DE-Anmeldung 101 03 627.2 bekannten strukturierten MB-Vliesen geschieht hier die Aufnahme und die weitere Verteilung in wesentlich kürzerer Zeit, sodass eine geregelte Ableitung der Flüssigkeiten in die Saugschicht schneller als beim Stand der Technik stattfindet.

Erklärt wird dies durch die leichte Aufnahme der Körperflüssigkeiten in den Bereichen geringer Dichte (a) , wobei die Fluide zunächst schnell in die Kavitäten eindringen können und dort zwischengespeichert werden. Die Verteilung geschieht dann entlang der Zonen hoher Dichte (b) bis zur endgültigen Ableitung in die Saug-und Speicherschicht.

Überraschenderweise zeigte sich, dass der erfindungsgemäß strukturierte Meltblown-Vliesstoff auch in weiteren Bereichen, beispielsweise bei der Verwendung als Putztuch, speziell zur Reinigung glatter Oberflächen wie Glas oder Kunststoff, dem Stand der Technik überlegen ist.

Für die Reinigung von Oberflächen eignet sich insbesondere die Seite (2) des erfindungsgemäßen Vliesstoffes. Durch die Kombination aus den vorhandenen feinen Meltblownfasern und den groben Multi-Mikrofilamentsträngen ergibt sich eine, gegenüber dem Stand der Technik verbesserte Reinigungswirkung.

Durch die erfindungsgemäße Struktur kann der Vliesstoff dann die abgelösten Schmutzpartikel in den Kavitäten speichern und maskiert diese, sodass sie beim weiteren Wischvorgang nicht mehr "schmieren".

In einem Staubbindetest, bei welchem eine Glasplatte mit Aktivkohlestaub beaufschlagt wurde, zeigte der erfindungsgemäß strukturierte Meltblown-Vliesstoff ein knapp dreimal höheres Schmutzspeichervermögen als ein nach dem Stand der Technik gefertigtes, kommerziell erhältliches Staubwischtuch.

Bei diesem Test wird zunächst das absolute Gewicht des eingesetzten Vlieses ermittelt. Dann umhüllt man ein 500 g schweres Gewicht mit dem zu testenden Material. Die eigentliche Reinigungswirkung wird dann ermittelt, indem man den Probenkörper dreimal auf einer Länge von 50 cm über die mit Aktivkohlenstaub bedeckte Glasplatte zieht. Abschließend wird das Vliesstück wiederum gewogen. Die Gewichtszunahme bezogen auf das Ausgangsgewicht in Prozent dient als Maß für die Reinigungswirkung.

Bei dem erfindungsgemäßen Meltblown-Vliesstoff wurden in einem Test nach der oben beschriebenen Methode 5,9% des Holzkohlenstaubes gespeichert. Im Gegensatz dazu zeigten Wischtücher nach dem Stand der Technik aus beispielsweise thermobondierten Stapelfaservlies aus 100% PP-Faser, 1.7 dtex ein Staubbindevermögen von 2,2%.

Wie man aus den genannten Beispielen erkennen kann, ist der erfindungsgemäß strukturierte, voluminöse Meltblown-Vliesstoff in einer Vielzahl von Anwendungsbereichen einsetzbar. Speziell bei Anwendungen, welche die Aufnahme und Speicherung fester oder flüssiger Substanzen verlangen, ist der beanspruchte Vliesstoff dem Stand der Technik überlegen.

## Patentansprüche

1. Strukturiertes, voluminöses Meltblown-Vlies
**dadurch gekennzeichnet,**
- **dass** die Oberfläche der Seite (2) des Vlieses eine unregelmäßige Grobstruktur (3) aufweist, welche auf schlaufen- und/ oder hakenförmig in den Querschnitt eingebundener Multi-Mikrofilamentstränge (4) basiert,
- **dass** die Oberfläche der Seite (1) des Vlieses eine normale Meltblownstruktur (5) aufweist,
- **dass** das Vlies im Querschnitt längs und quer zur Fertigungsrichtung Zonen unterschiedlicher Dichten (a,b) aufweist und
- **dass** die Zonen geringer Dichte (b) Kavitäten aufweisen.

2. Strukturiertes, voluminöses Meltblown-Vlies nach Anspruch 1,
**dadurch gekennzeichnet,**
**dass** das Vlies aus thermoplastischen Polymeren besteht.

3. Strukturiertes, voluminöses Meltblown-Vlies nach Anspruch 1,
**dadurch gekennzeichnet,**
**dass** das Vlies ein Flächengewicht von größer 30 g/qm und kleiner 500 g/qm aufweist.

4. Strukturiertes, voluminöses Meltblown-Vlies nach Anspruch 1,
**dadurch gekennzeichnet,**
**dass** das Vlies ein Dicke von größer 0,3mm aufweist.

5. Strukturiertes, voluminöses Meltblown-Vlies nach Anspruch 1,
**dadurch gekennzeichnet,**
**dass** das Vlies bei einem Differenzdruck von 200 Pa eine Luftdurchlässigkeit größer 1000 I/qm*s hat.

6. Strukturiertes, voluminöses Meltblown-Vlies nach Anspruch 1,
**dadurch gekennzeichnet,**
**dass** die Grobstruktur (3) ein baumrindenartiges Aussehen hat.

7. Strukturiertes, voluminöses Meltblown-Vlies nach Anspruch 1,
**dadurch gekennzeichnet,**
**dass** das Vlies einlagig ist.

8. Strukturiertes, voluminöses Meltblown-Vlies nach Anspruch 1,
**dadurch gekennzeichnet,**
**dass** die Feinheit der Mikrofaserfilamente mindestens 0,01 dtex und höchstens 1 dtex beträgt.

9. Strukturiertes, voluminöses Meltblown-Vlies nach Anspruch 8,
**dadurch gekennzeichnet,**
**dass** die Multi-Mikrofilamentstränge (4) aus 10 bis 10000 Einzel-Mikrofaserfilamenten gebildet werden.

10. Strukturiertes, voluminöses Meltblown-Vlies nach Anspruch 1,
**dadurch gekennzeichnet,**
**dass** das Vlies hydrophoben Charakter aufweist.

11. Strukturiertes, voluminöses Meltblown-Vlies nach Anspruch 1,
**dadurch gekennzeichnet,**
**dass** das Vlies oleophilen Charakter aufweist.

12. Strukturiertes, voluminöses Meltblown-Vlies nach Anspruch 1,
**dadurch gekennzeichnet,**
**dass** das Vlies hydrophilen Charakter aufweist.

13. Strukturiertes, voluminöses Meltblown-Vlies nach Anspruch 1,
**dadurch gekennzeichnet,**
**dass** das Vlies aus einer Mischung thermoplastischer Polymere besteht

14. Strukturiertes, voluminöses Meltblown-Vlies nach Anspruch 1,
**dadurch gekennzeichnet,**
**dass** das Vlies aus einer Mischung von thermoplastischen Homopolymeren und thermoplastischen Copolymeren besteht.

## Claims

1. A structured, voluminous melt-blown fleece
**characterised in that**
- the surface of the side (2) of the fleece features an irregular rough texture (3), which is based on loop- and/or hook-shaped multiple microfilament skeins (4) enmeshed in the cross-section,
- that the surface of the side (1) of the fleece features a normal melt-blown structure (5),
- that the fleece features zones of different densities (a, b) in the cross-section longitudinally and transversely to the production direction and
- that the zones of lower density (b) feature cavities.

2. The structured, voluminous melt-blown fleece according to Claim 1,
**characterised in that**
the fleece consists of thermoplastic polymers.

3. The structured, voluminous melt-blown fleece according to Claim 1,
**characterised in that**
the fleece features an areal weight greater than 30 g/sq. m and smaller than 500 g/sq. m.

4. The structured, voluminous melt-blown fleece according to Claim 1,
**characterised in that**
the fleece features a thickness greater than 0.3 mm.

5. The structured, voluminous melt-blown fleece according to Claim 1,
**characterised in that**
the fleece has air permeability greater than 1000 I/sq. m*s at a differential pressure of 200 Pa .

6. The structured, voluminous melt-blown fleece according to Claim 1,
**characterised in that**
the rough texture (3) has a tree-bark appearance.

7. The structured, voluminous melt-blown fleece according to Claim 1,
**characterised in that**
the fleece is single layered.

8. The structured, voluminous melt-blown fleece according to Claim 1,
**characterised in that**
the fineness of the microfiber filaments is at least 0.01 dtex and a
maximum of 1 dtex.

9. The structured, voluminous melt-blown fleece according to Claim 8,
**characterised in that**
the multiple micro filament skeins (4) are formed out of 10 to 10000 single micro-fibre filaments.

10. The structured, voluminous melt-blown fleece according to Claim 1,
**characterised in that**
the fleece features a hydrophobic characteristic.

11. The structured, voluminous melt-blown fleece according to Claim 1,
**characterised in that**
the fleece features an oleophilic characteristic.

12. The structured, voluminous melt-blown fleece according to Claim 1,
**characterised in that**
the fleece features a hydrophilic characteristic.

13. The structured, voluminous melt-blown fleece according to Claim 1,
**characterised in that**
the fleece consists of a mixture of thermoplastic polymers.

14. The structured, voluminous melt-blown fleece according to Claim 1,
**characterised in that**
the fleece consists of a mixture of thermoplastic homopolymers and thermoplastic copolymers.

## Revendications

1. Non-tissé melt-blown volumineux à structure
**caractérisé en ce**
- **que** la surface du côté (2) du non-tissé présente une structure grossière irrégulière (3), laquelle est basée sur des fils multiples de microfilaments (4) liés dans la section transversale en forme de boucles et/ou de crochets,
- en ce que la surface du côté (1) du non-tissé présente une structure melt-blown normale (5),
- en ce que le non-tissé présente en section transversale, en longueur et transversalement par rapport au sens de fabrication, des zones de densités différentes (a, b) et
- en ce que les zones de densité moindre (b) présentent des cavités.

2. Non-tissé melt-blown volumineux à structure selon la revendication 1,
**caractérisé en ce**
**que** le non-tissé est constitué de polymères thermoplastiques.

3. Non-tissé melt-blown volumineux à structure selon la revendication 1,
**caractérisé en ce**
**que** le non-tissé présente une masse surfacique supérieure à 30 g/m² et inférieure à 500 g/m².

4. Non-tissé melt-blown volumineux à structure selon la revendication 1,
**caractérisé en ce**
**que** le non-tissé présente une épaisseur supérieure à 0,3 mm.

5. Non-tissé melt-blown volumineux à structure selon la revendication 1,
**caractérisé en ce**
**que** le non-tissé, à une pression différentielle de 200 Pa, a une perméabilité à l'air supérieure à 1000l/m²*s.

6. Non-tissé melt-blown volumineux à structure selon la revendication 1,
**caractérisé en ce**
**que** la structure grossière (3) a un aspect semblable à l'écorce d'arbre.

7. Non-tissé melt-blown volumineux à structure selon la revendication 1,
**caractérisé en ce**
**que** le non-tissé est composé d'une couche.

8. Non-tissé melt-blown volumineux à structure selon la revendication 1,
**caractérisé en ce**
**que** la finesse des filaments de microfibres est de minimum 0,01 dtex et maximum 1 dtex.

9. Non-tissé melt-blown volumineux à structure selon la revendication 8,
**caractérisé en ce**
**que** les fils multiples de microfilaments (4) sont formés à partir de 10 jusqu'à 10000 filaments de microfibres individuels.

10. Non-tissé melt-blown volumineux à structure selon la revendication 1,
**caractérisé en ce**
**que** le non-tissé présente un caractère hydrophobe.

11. Non-tissé melt-blown volumineux à structure selon la revendication 1,
**caractérisé en ce**
**que** le non-tissé présente un caractère oléophile.

12. Non-tissé melt-blown volumineux à structure selon la revendication 1,
**caractérisé en ce**
**que** le non-tissé présente un caractère hydrophile.

13. Non-tissé melt-blown volumineux à structure selon la revendication 1,
**caractérisé en ce**
**que** le non-tissé est constitué d'un mélange de polymères
thermoplastiques.

14. Non-tissé melt-blown volumineux à structure selon la revendication 1,
**caractérisé en ce**
**que** le non-tissé est constitué d'un mélange d'homopolymères thermoplastiques et de copolymères thermoplastiques.
